# EUROPEAN PATENT SPECIFICATION

(11) **EP 3 235 886 B1**
(45) Date of publication and mention of the grant of the patent: **21.10.2020**
(21) Application number: 17167829.5
(22) Date of filing: 24.04.2017
(51) Int. Cl.: C09D 129/04, F28F 3/02, C08K 5/13, C08L 71/02

(54) **ORGANIC HYDROPHILIC COATING COMPOSITION AND HYDROPHILIC FILM, AND ALUMINUM MATERIAL FOR HEAT EXCHANGER**
ORGANISCHE HYDROPHILE BESCHICHTUNGSZUSAMMENSETZUNG UND HYDROPHILER FILM UND ALUMINIUMMATERIAL FÜR WÄRMETAUSCHER
COMPOSITION DE REVÊTEMENT HYDROPHILE ORGANIQUE ET FILM HYDROPHILE ET MATÉRIAU D'ALUMINIUM POUR ÉCHANGEUR DE CHALEUR

(30) Priority: 22.04.2016 JP 2016085705
(43) Date of publication of application: 25.10.2017
(73) Proprietor: Alcom Nikkei Specialty Coating Sdn. Bhd., 41050 Klang, Selangor (MY)
(72) Inventor: Ishii, Toru, 41050 Klang; Selangor Darul Ehsan (MY); Mohamed-Nasri, Nur-Sarafina, 41050 Klang; Selangor Darul Ehsan (MY)
(74) Representative: Vossius & Partner Patentanwälte Rechtsanwälte mbB

(56) References cited:
- EP-A2- 0 518 699
- WO-A1-03/056576
- JP-A- 2007 268 860

## Description

### Technical Field

The present invention relates to an organic hydrophilic coating composition for forming a hydrophilic film on each of surfaces of various articles such as hard materials including a metallic material, such as an aluminum material made of aluminum or an aluminum alloy, a copper material made of copper or an alloy thereof, or a steel material, a plastic material, and a ceramics material, such as glass or tile, and a hydrophilic film formed using the organic hydrophilic coating composition, and an aluminum material for a heat exchanger including the hydrophilic film.

### Background Art

Hydrophilic hard materials having hydrophilic films on the surfaces of various articles such as hard materials, such as metallic materials, plastic materials, and ceramics materials, are used in various fields. For example, a hydrophilic hard material including an aluminum material as the hard material is light and excellent in thermal conductivity, processability, and the like, and hence is widely used in applications such as air-conditioning units to be used in buildings and automobiles, as various aluminum materials for heat exchangers, such as a fin material and a tube material.

In addition, such hydrophilic hard materials are each required to have not only excellent hydrophilicity but also various specific functions depending on intended purposes. For example, in the case of an aluminummaterial for a heat exchanger, in particular, a fin material, in order to enhance heat-exchange efficiency of a heat exchanger or in order to reduce the size of the heat exchanger, or by extension, an air-conditioning unit, fins are spaced as closely as possible or subjected to treatment for forming cuts called louvers. Accordingly, water in air is condensed on the surface of a heat exchanger, such as the surface of the fin, during, for example, air conditioning for cooling, and the resultant condensed water is liable to remain as a water droplet on the surface of the heat exchanger to reduce an area for heat exchange, resulting in lowering heat-exchange efficiency, or to form a bridge between the fins to increase airflow resistance, resulting in significantly lowering the heat-exchange efficiency of the heat exchanger. Therefore, an attempt to prevent generation of water droplets resulting from condensed water for a long period of time is made as described below. A hydrophilic film is formed on each of the surfaces of the fin materials using a hydrophilic coating composition to enhance water wettability on each of the surfaces of the fin materials, resulting in suppressing the generation of the water droplets as much as possible. In addition, such fin materials are supplied as precoated fin materials each obtained by forming a hydrophilic film before integration into a heat exchanger so as to have long-term hydrophilicity. Regarding the term "precoated", conventionally, the aluminum was painted at the stage of the plate and processed, but recently it began that aluminum plates were painted after processing.

In view of the foregoing, as such hydrophilic coating composition for forming a hydrophilic film on the surface of an aluminum material for a heat exchanger, there have been proposed: inorganic hydrophilic coating compositions, such as liquid glass and silica; organic hydrophilic coating compositions each including a water-soluble hydrophilic resin, such as a polyvinyl alcohol resin, a polyacrylamide resin, a polyacrylic resin, or a cellulose resin, which can solve problems resulting from the inorganic hydrophilic coating compositions, i.e., problems with unpleasant odors during mold wear in molding or air conditioning for cooling (see Patent Literatures 1 to 4); an organic hydrophilic coating composition obtained by adding a nitrate compound having a monovalent or divalent element to each of a polyvinyl alcohol resin and a polyethylene glycol resin, which can solve a problem resulting from a hydrophilic film formed using each of the organic hydrophilic coating compositions, i.e., a problem with the deterioration of water resistance and long-term hydrophilicity (Patent Literature 5) ; and an organic hydrophilic coating composition obtained by adding a specific compound selected from dibutylhydroxytoluene, a carbazide compound, L-ascorbic acid, sodium L-ascorbate, L-ascorbyl stearate, erythorbic acid, sodium erythorbate, and sodium sulfite to a hydrophilic resin, such as a polyacrylate/sulfonate copolymer, which can secure long-term hydrophilicity and has pollution resistance for preventing adhesion of pollutants, such as organic acids or organic esters (Patent Literature 6).

Meanwhile, many of recent air-conditioning units to be used in buildings, automobiles, and the like are air-conditioning units for air cooling and heating, which are used for air conditioning for heating in winter and for air conditioning for cooling in summer, and the usage environment in winter of an aluminum material for a heat exchanger, in particular, a fin material, to be used in such air-conditioning units for air cooling and heating is completely different from that in summer. For example, dew condensation water is not generated in use of the air-conditioning units for air heating in winter, and hence an environment in which various pollutants, such as oil droplets in cooking, oily smears due to wax or oil for flooring, oily smears due to hair dressings and cosmetics, oily smears of nicotine and polyaromatic hydrocarbons due to smoking, and house dust, are liable to adhere to the units is established. In contrast, dew condensation water is generated in use of the air-conditioning units for air cooling in summer, and hence an environment in which such pollutants are hard to adhere to the units is established. Accordingly, from the viewpoint of maintaining excellent heat-exchange efficiency for as long a time as possible, the hydrophilic film in a precoated fin material desirably has not only the above-mentioned properties including long-term hydrophilicity but also the so-called "self-cleaning property" that enables easy removal of a pollutant or the like, which temporarily adheres to the hydrophilic film of the fin material in use of the air-conditioning units for air heating, with condensed water generated on the surface of the fin material in use of the air-conditioning units for air cooling.

Accordingly, heretofore, there have been proposed: a coating composition obtained by adding, at predetermined ratios, ammonia or an amine, such as dimethylethanolamine (DMEA), triethanolamine (TEA), or dimethylamine (DMA), and an alkali metal hydroxide, such as carboxymethylcellulose sodium (CMC-Na), carboxymethylcellulose ammonium (CMC-ammonium), or hydroxymethylcellulose (HMC), to an aqueous solution of an acrylic polymer mixture including 15% by weight or more, in a solid component, of an acrylic polymer (A: a polymer including 40 mol% or more of each of a sulfonic acid group-containing monomer and a carboxyl group-containing monomer) and 40% by weight or more, in the solid component, of an acrylic polymer (B: a polymer including 65 mol% or more of a carboxyl group-containing monomer); and a fin for a heat exchanger having a coating film formed using the coating composition. When the coating composition and the fin for a heat exchanger are used, a pollutant adhering to the coating, such as oil and fat, can be washed out with dew condensation water generated during air conditioning for cooling. Thus, hydrophilicity can be maintained for a long period of time (Patent Literature 7).

Patent Literature 8 refers to a hydrophilic coating composition comprising, on a solid basis,
(a) 0.3 to 6 parts by weight of polyvinyl pyrrolidone having a polymerization degree of 10 to 1000; and
(b) 1 to 10 parts by weight of polyvinyl alcohol having a saponification degree of 80% or more and a polymerization degree of 100 to 1000,
the weight ratio of the component (a) to the components (a) and (b), (a)/[(a)+(b)], being in the range of 0.1 to 0.9.

### Citation List

### Patent Literature

[PTL 1] JP 63-173632 A
[PTL 2] JP 02-258874 A
[PTL 3] JP 05-302042 A
[PTL 4] JP 09-014889 A
[PTL 5] JP 3890908 B2
[PTL 6] JP 5319952 B2
[PTL 7] JP 2010-159379 A
[PTL 8] EP 0 518 699 A2

### Summary of Invention

### Technical Problem

However, the coating composition of Patent Literature 7 contains, as a main component, a special acrylic polymer mixture including the acrylic polymers (A) and (B), and it is essentially required that a special alkali metal hydroxide be used therein and ammonia or an amine be added thereto. As a result, a product cost inevitably increases. In addition, the coating composition always causes generation of amine odor when applied, may cause generation of amine odor during air conditioning for cooling and heating, and hence has problems with unpleasant odors different from the problems with unpleasant odors of the inorganic hydrophilic coating composition during mold wear in molding or air conditioning for cooling.

Accordingly, the inventors of the present invention have made extensive investigations on development of an organic hydrophilic coating composition that has properties of a related-art composition, such as long-term hydrophilicity, that causes no problems with the unpleasant odors, that can exhibit the self-cleaning property by which a pollutant or the like temporarily adhering to the surface of a hydrophilic film can be easily washed out during use, and that is useful in, but not particularly limited to, an aluminum material for a heat exchanger, such as a precoated fin material. As a result, the inventors have surprisingly found that the object can be achieved by adding, as a resin component, a polyvinyl alcohol resin and, as an additional component, a phenol compound having a specific substituent to exhibit a hydrogen bond-suppressing effect by which crystallization of the polyvinyl alcohol resin is suppressed. Thus, the present invention has been completed.

Accordingly, an object of the present invention is to provide an organic hydrophilic coating composition for forming a hydrophilic film having not only properties including long-term hydrophilicity but also a self-cleaning property on the surface of any of various articles such as hard materials, such as metallic materials, plastic materials, and ceramics materials.

Another object of the present invention is to provide an article such as aluminum material for a heat exchanger, such as a precoated fin material, having a hydrophilic film formed using such organic hydrophilic coating composition.

### Solution to Problem

That is, the gist of the present invention is as described in the appended claims.

### Advantageous Effects of Invention

According to the organic hydrophilic coating composition of the present invention, the hydrophilic film that does not cause problems with unpleasant odors and has not only properties including long-term hydrophilicity but also a self-cleaning property can be formed on the surface of any of various articles such as hard materials, such as metallic materials, plastic materials, and ceramics materials.

In addition, the aluminum material for a heat exchanger having a hydrophilic film formed using the organic hydrophilic coating composition of the present invention, such as a precoated fin material, does not cause the problems with unpleasant odors and exhibits not only properties such as long-term hydrophilicity but also a self-cleaning property by which a pollutant is easily washed out with water, such as dew condensation water, approaching the surface of the material during, for example, air conditioning for cooling even if the surface is polluted during, for example, air conditioning for heating in which dew condensation water or the like is not generated. Inaddition, a washing operation performed at intervals can be carried out much more easily than the operation used to be.

### Description of Embodiments

An organic hydrophilic coating composition and a hydrophilic film, and an aluminum material for a heat exchanger of the present invention are described below in detail.

The organic hydrophilic coating composition of the present invention contains a polyvinyl alcohol resin (PVA) and a polyethylene glycol resin (PEG) as a resin component and a phenol compound as an additional component. The phenol compound contained as the additional component is selected from phenol antioxidants, has two or more hydroxyphenyl groups in its molecule, and each of the hydroxyphenyl groups has a bulky substituent that exhibits an effect of steric hindrance on a hydroxyl group.

The polyvinyl alcohol resin (PVA) constituting the resin component in the organic hydrophilic coating composition of the present invention is a linear polymer having a repeating structure represented by -[CH₂-CH(OH)]ₙ-, is a completely saponified polyvinyl alcohol having a degree of saponification of 97 mol% or more, more preferably 98.5 mol% or more and 99.8 mol% or less, and is a PVA having an average degree of polymerization (n) of preferably from 500 to 2, 000, more preferably from 1,000 to 1,700. When the degree of saponification is less than 97 mol%, both hydrophilicity and water resistance may deteriorate. In addition, when the average degree of polymerization (n) is less than 500, both hydrophilicity and water resistance may deteriorate. In contrast, when the average degree of polymerization (n) is more than 2,500, the viscosity may increase to deteriorate workability.

Such polyvinyl alcohol resin (PVA) includes modified products having various functional groups introduced. For example, many commercially available products, such as a PVA having an ethylene oxide group introduced (manufactured by Nippon Synthetic Chemical Industry Co., Ltd., trade name: WO-320N), a PVA having a carboxyl group introduced (manufactured by Nippon Synthetic Chemical Industry Co., Ltd., trade name: T-330H), a PVA having an acetoacetyl group introduced, and a PVA having a sulfonic acid group introduced, have been placed on the market, and all of the products may be used.

In addition, a polyethylene glycol resin (PEG) is blended as the resin component of the organic hydrophilic coating composition to further improve long-term hydrophilicity of a hydrophilic film formed using the composition. Such polyethylene glycol resin (PEG) has a weight-average molecular weight of more preferably 1,000 or more and 20,000 or less, still more preferably 4,000 or more and 11, 000 or less, and examples thereof may include polyethylene glycol serving as a homopolymer, and a copolymer of ethylene glycol and propylene glycol. When the weight-average molecular weight is less than 1,000, the hydrophilicity may relatively deteriorate. In contrast, when the weight-average molecular weight is more than 20,000, stability of a coating bath may deteriorate. When the PEG is blended as the resin component, the blending ratio of the PEG is preferably 10% by mass or more and 22% by mass or less, more preferably 14% by mass or more and 19% by mass or less, with respect to the total of the PVA and the PEG. When the blending ratio of the PEG is less than 10% by mass, an effect resulting from blending of the PEG may be low. In contrast, even when the blending ratio of the PEG is more than 22% by mass, the effect resulting from blending of the PEG may be lowered.

In addition, in the present invention, the polyvinyl alcohol resin (PVA) and the polyethylene glycol resin (PEG) are used as the resin component, and a phenol compound having a hydrogen bond-suppressing effect is added as an additional component to the resin component. The phenol compound used as the additional component has two or more hydroxyphenyl groups in its molecule, and each of the hydroxyphenyl groups is required to have a bulky substituent that exhibits an effect of steric hindrance on a hydroxyl group. The bulky substituent enables, in the PVA that is a linear polymer for forming a hydrophilic film, the phenol compound to exist between linear polymer chains of the PVA and to expand part of spaces between the linear polymer chains such that formation of a hydrogen bond of hydroxyl groups (OH) in the linear polymer chains expanded is suppressed. Probably as a result of the foregoing, the so-called hydrogen bond-suppressing effect is exhibited to suppress a decrease in number of free hydroxyl groups, resulting in preventing deterioration of hydrophilicity of the hydrophilic film for a long period of time.

In addition, according to the investigations made by the inventors of the present invention, the bulky substituent in each of the hydroxyphenyl groups of the phenol compound added as the additional component is preferably adjacent to the hydroxyl group (e.g., in ortho position compared to the hydroxyl group) and is preferably an alkyl group adjacent to the hydroxyl group. More preferably the bulky substituent in each of the hydroxyphenyl groups of the phenol compound added as the additional component is one kind or two or more kinds of alkyl groups selected from a methyl group, an ethyl group, an isopropyl group, and a tert-butyl group. Typical examples of such phenol compound having two or more hydroxyphenyl groups may include: a 2,2'-methylenebis(6-alkyl-p-cresol), such as 2,2'-methylenebis(6-tert-butyl-p-cresol) (CAS No. 119-47-1; manufactured by Rhein Chemie, trade name: Additin RC7115); a tris-(3,5-dialkyl-4-hydroxybenzyl) isocyanurate, such as tris-(3,5-di-t-butyl-4-hydroxybenzyl) isocyanurate (CAS No. 27676-62-6; manufactured by ADEKA Corporation, trade name: ADK AO-20); a tris-(2-alkyl-4-hydroxy-5-alkylphenyl)-butane, such as tris-(2-methyl-4-hydroxy-5-t-butylphenyl)-butane (CAS No. 1843-03-4; manufactured by ADEKA Corporation, trade name: ADK AO-30); a 4,4'-butylidenebis(6-alkyl-m-cresol), such as 4,4'-butylidenebis(6-tert-butyl-m-cresol) (CAS No. 85-60-9; manufactured by ADEKA Corporation, trade name: ADK AO-40); a tetrakis[3-(3,5-dialkyl-4-hydroxyphenyl)propionyloxymethyl] met hane, such as tetrakis[3-(3,5-di-t-butyl-4-hydroxyphenyl)propionyloxymethyl] methane (CAS No. 6683-19-8; manufactured by ADEKA Corporation, trade name: ADK AO-60); a 3,9-bis[2-[3-(3-alkyl-4-hydroxy-5-alkylphenyl)propionyloxy]-1, 1-dimethylethyl]-2,4,8,10-tetraoxaspiro[5,5]undecane, such as 3,9-bis[2-[3-(3-tert-butyl-4-hydroxy-5-methylphenyl)propionylo xy]-1,1-dimethylethyl]-2,4,8,10-tetraoxaspiro[5,5]undecane (CAS No. 90498-90-1; manufactured by ADEKA Corporation, trade name: ADK AO-80); a 1,3,5-trimethyl-2,4,6-tris(3,5-dialkyl-4-hydxoxybenzyl)benzene, such as 1,3,5-trimethyl-2,4,6-tris(3,5-di-t-butyl-4-hydroxybenzyl)benz ene (CAS No. 1709-70-2; manufactured by ADEKA Corporation, trade name: ADK AO-330); and an N,N'-hexamethylenebis[3-(3,5-dialkyl-4-hydroxyphenyl)propaneam ide], such as N,N'-hexamethylenebis[3-(3,5-di-tert-butyl-4-hydroxyphenyl) pro paneamide] (CAS No. 23128-74-7; manufactured by BASF, trade name: Irganox 1098) . All of the compounds are used as antioxidants, and the phenol compound used as the additional component in the present invention is selected from phenol antioxidants.

In the present invention, the blending ratios of the polyvinyl alcohol resin (PVA) used as the resin component and the phenol compound used as the additional component are as described below. The blending ratio of the PVA is typically 40 g/L or more and 100 g/L or less, preferably 50 g/L or more and 70 g/L or less, and the blending ratio of the phenol compound used as the additional component is typically 0.01 g/L or more and 12 g/L or less, preferably 0.4 g/L or more and 6.0 g/L or less. When the blending ratio of the PVA is less than 40 g/L, it may be difficult to achieve a desired film thickness by application of a coating. In contrast, when the blending ratio of the PVA is more than 100 g/L, stability of a coating may deteriorate. In addition, when the blending ratio of the phenol compound used as the additional component is less than 0.01 g/L, stable hydrophilicity may not be achieved. In contrast, when the blending ratio of the phenol compound is more than 12 g/L, problems such as poor adhesion and poor external appearance may occur. In addition, when the polyethylene glycol resin (PEG) is used as the resin component, the blending ratio of the polyethylene glycol resin (PEG) is typically 4 g/L or more and 15 g/L or less, preferably 9 g/L or more and 14 g/L or less, in view of the blending ratio to the PVA. When the blending ratio of the PEG is less than 4 g/L, an enhancing effect on hydrophilicity may deteriorate. In contrast, when the blending ratio of the PEG is more than 15 g/L, stability of a coating may deteriorate.

The organic hydrophilic coating composition of the present invention includes the polyvinyl alcohol resin (PVA) as the resin component and the phenol compound as the additional component, and may further include, if necessary, a third additional component, such as: an organo-copper, organic iodine, imidazole, isothiazoline, pyrithione, triazine, or silver preservative having an antibacterial or antifungal action for preventing corruption during storage; an anticorrosive agent, such as tannic acid, gallic acid, phytic acid, or phosphinic acid; a leveling agent, such as an alkyl ester of a polyalcohol or a polyethylene oxide condensate; a filler added in such an amount as not to impair compatibility, such as polyacrylamide or polyvinyl acetamide; a colorant, such as titanium oxide or a phthalocyanine compound; or a surfactant, such as an alkyl sulfate or alkyl sulfosuccinate surfactant.

The organic hydrophilic coating composition of the present invention is prepared by dissolving or dispersing the resin component, the additional component, and the third additional component in an appropriate dispersion medium, such as water, acetone, ethylene glycol monobutyl ether (also known as "butyl cellosolve" or "butycello"), preferably a water-based dispersion medium, such as water, isopropyl alcohol, or ethanol. In addition, a method of preparing the organic hydrophilic coating composition of the present invention is not particularly limited, but because the polyvinyl alcohol resin (PVA) has relatively poor solubility in water, the method preferably includes, for example, first, dispersing the PVA in water at ordinary temperature for from 5 min to 10 min, heating the resultant at from 80°C to 90°C for from 30 min to 60 min to dissolve the PVA, adding water thereto to achieve a predetermined concentration, subsequently, if necessary, adding the polyethylene glycol resin (PEG) under stirring to dissolve the PEG, then emulsifying the phenol compound with preferably a surfactant to prepare a homogeneous water dispersion, adding the water dispersion thereto, and mixing the resultant.

The organic hydrophilic coating composition of the present invention can be used to form an article comprising a hydrophilic film on a part or whole of a surface of the article, wherein the hydrophilic film comprises a polyvinyl alcohol resin as a resin component; and a phenol compound as an additional component, wherein the phenol compound, which is contained as the additional component, has two or more hydroxyphenyl groups in its molecule, and each of the hydroxyphenyl groups has a bulky substituent that exhibits an effect of steric hindrance on a hydroxyl group. The hydrophilic film is preferably formed by applying and baking the organic hydrophilic coating composition. The hydrophilic film preferably comprises 70.0 wt.-% to 99.9 wt.-% polyvinyl alcohol resin and 0.02 wt.-% to 10.0 wt.-% of the phenol compound, more preferably 77.0 wt.-% to 99.8 wt.-% polyvinyl alcohol resin and 0.1 wt.-% to 8.0 wt.-% of the phenol compound. If desired, a polyethylene glycol resin can be additionally present. If present, the polyethylene glycol resin is preferably present in an amount of 0.1 wt. -% to 20.0 wt. -%, more preferably 1.5 wt. -% to 17.0 wt.-%. A method of applying the organic hydrophilic coating composition of the present invention to each of the surfaces of various articles such as hard materials is also not particularly limited, and for example, there may be adopted: a method involving using a roll coater, which is typically adopted; a method involving using a gravure roll, which is useful for controlling the amount of the composition applied; a natural coating method, which is useful for forming a thick coating; or a reverse coating method, which is advantageous for forming a beautifully coated surface.

For example, in preparation of the aluminum material for a heat exchanger of the present invention, such as a precoated fin material, using the organic hydrophilic coating composition of the present invention, a hydrophilic film is formed on the surface of an aluminum material by, first, applying the coating composition to the surface of the aluminum material using, for example, a roll coater, and then heating the resultant under high-temperature air blowing using, for example, a floater oven, preferably heating the resultant under high-temperature air blowing at from 10 m/min to 30 m/min at a high temperature of from 200°C to 300°C for from 10 seconds to 15 seconds.

The thickness of the hydrophilic film formed on the surface of a hard material using the organic hydrophilic coating composition of the present invention varies depending on, for example, the kind of the hard material and intended purposes, and is not particularly limited. However, for example, when the hard material is a precoated fin material, the thickness is typically from 0.05 µm to 5 µm, preferably from 0.1 µm to 2 µm, more preferably from 0.5 µm to 1.5 µm.

According to the investigations of the inventors of the present invention, the following assumption has been made. In the organic hydrophilic coating composition of the present invention, because hydroxyl groups in two or more hydroxyphenyl groups each protected by the bulky substituent in a molecule of the phenol compound having a hydrogen bond-suppressing effect have affinities for hydroxyl groups in two linear polymer chains adjacent to each other of the polyvinyl alcohol resin (PVA) in the resin component, the compound enters a space between the two linear polymer chains to expand the space between the two linear polymer chains depending on the molecular size of the phenol compound, resulting in suppressing crystallization of the PVA by exhibiting the hydrogen bond-suppressing effect. In addition, the compound permits access of a relatively small molecule, such as a water molecule, so that the composition exhibits excellent hydrophilicity for a long period of time, and at the same time, inhibits access of a relatively large molecule, such as oily smear, and a pollutant, such as house dust, so that the composition exhibits excellent pollution resistance. In addition, as described above, the composition exhibits excellent hydrophilicity for a long period of time, and at the same time, exhibits excellent pollution resistance by inhibiting access of a relatively large pollutant. Therefore, when the composition is used as, for example, a hydrophilic film of a precoated fin material, even if a pollutant, such as oily smear or house dust, adheres to the surface of the hydrophilic film during, for example, air conditioning for heating in which dew condensation water or the like is not generated, the degree of adhesion is not high. In addition, when water, such as dew condensation water, generated during, for example, air conditioning for cooling approaches the film, the water easily enters a space between the hydrophilic film and the pollutant to separate the pollutant from the surface of the hydrophilic film. As a result, the pollutant is washed out together with the water, such as dew condensation water, and hence the composition exhibits a self-cleaning property.

### Examples

Preferred embodiments of the present invention are hereinafter specifically described based on Examples and Comparative Examples.

In the following Examples and Comparative Examples, properties such as hydrophilicity (initial hydrophilicity and long-term hydrophilicity), water resistance, pollution resistance, and a self-cleaning property were determined by the following methods.

### [Preparation of Test Piece]

In each of Examples 1 and 3 to 12, and Comparative Examples 1 to 5, a corrosion-resistant film was formed by chromate treatment to be described later on the surface of an aluminum material (AA3102; thickness: 0.10 mm) that had been subjected to degreasing treatment and washing treatment by ordinary methods, and in each of Examples 2 and 13, a corrosion-resistant coating film was formed by surface treatment based on urethane primer treatment to be described later on the surface of the aluminum material. The aluminum materials were cut into a size of 7 cm×15 cm to prepare surface-treated aluminum pieces for preparation of a test piece.
(1) Chromate treatment: A corrosion-resistant film having a Cr content of 100 mg/m² was formed on the surface of an aluminum material using a chromate treatment agent (manufactured by Nippon Paint Co., Ltd., trade name: ALSURF 407/47).
(2) Urethane primer treatment: A corrosion-resistant coating film having a thickness of 0.6 g/m² was formed by applying a primer treatment agent (manufactured by DKS Co. Ltd., trade name: SUPERFLEX SF150) to the surface of an aluminum material and curing the agent at 270°C for 10 seconds.

The organic hydrophilic coating compositions of Examples and Comparative Examples were separately applied to the surfaces of the resultant surface-treated aluminum pieces using a bar coater, and were baked under the conditions of 230°C and 10 seconds to form hydrophilic films at from 0.6 g/m² to 0.7 g/m² on the surface of the surface-treated aluminum pieces. Thus, test pieces of Examples and Comparative Examples were prepared.

### [Evaluation of Hydrophilicity (Initial Hydrophilicity and Long-term Hydrophilicity)]

A press oil (manufactured by Idemitsu Kosan Co., Ltd., trade name: AF-2C) was applied to each of the test pieces of Examples and Comparative Examples thus prepared, and dried by heating under drying conditions of 160°C and 10 min, and initial hydrophilicity immediately after the drying and long-term hydrophilicity after immersion in reverse osmosis (RO) water cleaned with a RO membrane under immersion conditions of ordinary temperature, running water, and 100 hr were measured.

In this procedure, the initial hydrophilicity and the long-term hydrophilicity were each measured by adding 2 µL of pure water dropwise to the hydrophilic film of each test piece arranged horizontally and determining a contact angle of the formed water droplet using a contact angle meter (manufactured by Kyowa Interface Science Co., Ltd.: CA-A), and each hydrophilicity was evaluated in accordance with the following evaluation criteria: evaluation score 5: contact angle of ≤10°, evaluation score 4: contact angle of from 11° to 20°, evaluation score 3: 21° to 30°, evaluation score 2: 31° to 35°, and evaluation score 1: ≥36°. When the evaluation score was 2 or more, the test piece was considered to have hydrophilicity (acceptable).

### [Evaluation of Water Resistance]

Each of the test pieces of Examples and Comparative Examples was immersed in RO water at ordinary temperature for 240 hr under running water conditions. Whether or not the coating film on the surface of the test piece after the immersion had a defect, such as blister, was examined by visually observing the coating film, and whether or not the coating film had flaking was examined by a cross-cut tape test (previous JIS.K 5400). When the test piece had no defect in the visual observation and no flaking in the tape peeling test, the test piece was evaluated as an acceptable one. In addition, when the test piece had one or both of the defect in the visual observation and the flaking in the tape peeling test, the test piece was evaluated as a rejected one.

### [Evaluation of Pollution Resistance]

Each of the test pieces of Examples and Comparative Examples was immersed in RO water at ordinary temperature under running water for 24 hr and then dried at ordinary temperature. Subsequently, the test piece was soaked in a beaker with a volume of 1 L including 1 g of stearic acid, heated at 100°C for 24 hr, and subjected to contact angle measurement after the heating.

Then, the pollution resistance was evaluated in accordance with the following evaluation criteria: evaluation score 5: contact angle of ≤10°, evaluation score 4: contact angle of from 11° to 20°, evaluation score 3: contact angle of from 21° to 30°, evaluation score 2: contact angle of from 31° to 35°, and evaluation score 1: contact angle of ≥36°. When the test evaluation score was 2 or more, the test piece was evaluated to have pollution resistance (acceptable).

### [Evaluation of Self-cleaning Property]

A square mark measuring 15 mm wide by 15 mm long (area: 225 mm²) was drawn with a commercially available permanent marker (manufactured by PILOT Corporation, trade name: Twin Marker MFN-15FB-B) on the lower half area of the surface of the hydrophilic film of each of the test pieces of Examples and Comparative Examples to form an oily smear.

Subsequently, each of the test pieces with the oily smear was placed against a wall to make a tilt angle of 90° relative to the horizontal plane. Water was sprayed repeatedly 150 times with a spray (amount of water used in a single spraying operation: from 0.8 ml to 0.9 ml) to the upper half area of the test piece using a spraying device, and the ratio (removal ratio) of an area on which the oily smear had been washed out with water sprayed to the upper half area and flowing to the lower half area was determined. The spraying of water using the spraying device was carried out such that water was not sprayed directly to the oily smear.

The removal ratio (%) of the oily smear was determined by measuring an area of the oily smear washed out with water (washed-out area: mm²) after completion of flowing of water after the completion of its spraying from the upper half area to the lower half area and after drying of the surface of the test piece as a ratio of the washed-out area (mm²) to the total area of the oily smear (225 mm²) .

Then, the self-cleaning property was evaluated in accordance with the following evaluation criteria: evaluation score 5: removal ratio of >81%, evaluation score 4: removal ratio of from 61% to 80%, evaluation score 3: removal ratio of from 41% to 60%, evaluation score 2: removal ratio of from 20% to 40%, and evaluation score 1: removal ratio of <20%. When the evaluation score was 2 or more, the test piece was evaluated to have a self-cleaning property (acceptable).

### [Comprehensive Evaluation]

Each of the organic hydrophilic coating compositions obtained in Examples and Comparative Examples was comprehensively evaluated by examining the composition for whether or not the composition was an acceptable product for all the evaluation items including initial hydrophilicity and long-term hydrophilicity relating to hydrophilicity, water resistance, pollution resistance, and a self-cleaning property, and by calculating the total of the evaluation scores of the initial hydrophilicity and the long-term hydrophilicity relating to hydrophilicity, the pollution resistance, and the self-cleaning property. The composition was evaluated in accordance with the following criteria: ⊚: the composition was acceptable for all the evaluation items and had a total evaluation score of 16 or more, ○: the composition was acceptable for all the evaluation items and had a total evaluation score of from 12 to 15, Δ: the composition was acceptable for all the evaluation items and had a total evaluation score of from 8 to 11, and ×: the composition was rejected for any of the evaluation items.

### [Reference Example 1, Examples 2 to 14 and Comparative Examples 1 to 5]

As the polyvinyl alcohol resin (PVA) of the resin component, there were used [PVA-1]: a polyvinyl alcohol having a degree of saponification of 99.3% and an average degree of polymerization of 1,000 (manufactured by Japan Vam & Poval Co., Ltd., trade name: VC-10), [PVA-2]: a polyvinyl alcohol having a degree of saponification of 98.0% and an average degree of polymerization of 1,700 (manufactured by Japan Vam & Poval Co., Ltd., trade name: JF-17L), and [PVA-3]: a polyvinyl alcohol having a degree of saponification of 97.0% and an average degree of polymerization of 1,700 (manufactured by Japan Vam & Poval Co., Ltd., trade name: VM-17) . In addition, as the polyethylene glycol resin (PEG) of the resin component, there were used [PEG-1]: a polyethylene glycol having a number-average molecular weight of 6,000 (manufactured by Sanyo Chemical Industries, Ltd., trade name: PEG-6000S), [PEG-2] : a polyethylene glycol having a number-average molecular weight of 1,500 (manufactured by Sanyo Chemical Industries, Ltd., trade name: PEG-1500), and [PEG-3]: a polyethylene glycol having a number-average molecular weight of 13,000 (manufactured by Sanyo Chemical Industries, Ltd., trade name: PEG-13000).

In addition, the following phenol compounds were each used as the phenol compound serving as an additional component.
[PhOH-1]: 2,2'-Methylenebis(6-tert-butyl-p-cresol) (CAS No. 119-47-1; manufactured by Rhein Chemie, trade name: Additin RC7115)
[PhOH-2]:Tris-(3,5-di-t-butyl-4-hydroxybenzyl) isocyanurate (CAS No. 27676-62-6; manufactured by ADEKA Corporation, trade name: ADK AO-20)
[PhOH-3]: Tris-(2-methyl-4-hydroxy-5-t-butylphenyl)-butane (CAS No. 1843-03-4; manufactured by ADEKA Corporation, trade name: ADK AO-30)
[PhOH-4]: 4,4'-Butylidenebis(6-tert-butyl-m-cresol) (CAS No. 85-60-9; manufactured by ADEKA Corporation, trade name: ADK AO-40)
[PhOH-5] : Tetrakis[3-(3,5-di-t-butyl-4-hydroxyphenyl)propionyloxymethyl] methane (CAS No. 6683-19-8; manufactured by ADEKA Corporation, trade name: ADK AO-60)
[PhOH-6] : 3,9-Bis[2-[3-(3-tert-butyl-4-hydroxy-5-methylphenyl)propionylo xy]-1,1-dimethylethyl]-2,4,8,10-tetraoxaspiro[5,5]undecane (CAS No. 90498-90-1; manufactured by ADEKA Corporation, trade name: ADK AO-80)
[PhOH-7] : 1, 3, 5-Trimethyl-2, 4, 6-tris (3,5-di-t-butyl-4-hydroxyben zyl)benz ene (CAS No. 1709-70-2; manufactured by ADEKA Corporation, trade name: ADK AO-330)
[PhOH-8] : N,N'-Hexamethylenebis[3-(3,5-di-tert-butyl-4-hydroxyphenyl) pro paneamide] (CAS No. 23128-74-7; manufactured by BASF, trade name: Irganox 1098)
[PhOH-9]: Hydroquinone (CAS No. 123-31-9)
[PhOH-10]: Hydroquinone monomethyl ether (CAS No. 150-76-5)
[PhOH-11]: Methylhydroquinone (CAS No. 95-71-6)
[PhOH-12]: Dibutylhydroxytoluene (CAS No. 128-37-0)

First, the polyvinyl alcohol resins (PVA) used as the resin components were dispersed in water used as a dispersion medium to prepare PVA dispersions each having a PVA concentration of 120 g/L, and the polyethylene glycol resins (PEG) used as the resin components were dispersed in water used as a dispersion medium to prepare PEG dispersions each having a PEG concentration of 100 g/L.

Next, 68 g/L of acetone and 20 g/L of a surfactant (manufactured by TOHO Chemical Industry Co., Ltd., trade name: PEPOL A-0858) were added to water with respect to 20 g/L of each of the phenol compounds used as the additional components, and were mixed under stirring to emulsify the phenol compound. Thus, a dispersion of each of the phenol compounds (PhOH dispersion) was prepared.

Further, the PVA dispersions, the PEG dispersions, and the PhOH dispersions prepared as above were used to prepare organic hydrophilic coating compositions of Reference Example 1, Examples 2 to 14 and Comparative Examples 1 to 5 having the compositions shown in Table 1.

The organic hydrophilic coating compositions of Examples and Comparative Examples prepared as above were used to prepare test pieces of Examples and Comparative Examples in conformity with the method described above, and the test pieces were evaluated for their properties including hydrophilicity (initial hydrophilicity and long-term hydrophilicity), water resistance, pollution resistance, and a self-cleaning property in conformity with the methods described above.

The results are shown in Table 1.

**[Table 1]**

| | | Composition of organic hydrophilic coating composition | | | | | | Properties of hydrophilic film | | | | | |
|---|---|---|---|---|---|---|---|---|---|---|---|---|---|
| | | PVA | | PEG | | PhOH compound | | Hydrophilicity | | Water resistance | Pollution resistance | Self-cleaning property | Comprehensive evaluation |
| | | Kind | Concentration of PVA (g/L) | Kind | Concentration of PEG (q/L) | Kind | Concentration of PhOH (g/L) | Initial | Long-term | | | | |
| Example | 1 | PVA-1 | 50 | PEG-1 | 0 | PhOH-2 | 1.0 | 4 | 2 | Acceptable | 2 | 5 | ○ |
| | 2 | PVA-1 | 50 | PEG-1 | 4 | PhOH-2 | 3.0 | 4 | 3 | " | 2 | 5 | ○ |
| | 3 | PVA-1 | 55 | PEG-1 | 11 | PhOH-1 | 3.0 | 5 | 4 | " | 2 | 5 | ⊚ |
| | 4 | PVA-1 | 55 | PEG-1 | 11 | PhOH-2 | 1.0 | 5 | 4 | " | 3 | 5 | ⊚ |
| | 5 | PVA-1 | 50 | PEG-1 | 10 | PhOH-3 | 0.5 | 5 | 3 | " | 3 | 5 | ⊚ |
| | 6 | PVA-1 | 60 | PEG-1 | 12 | PhOH-4 | 1.1 | 5 | 3 | " | 3 | 5 | ⊚ |
| | 7 | PVA-1 | 55 | PEG-1 | 11 | PhOH-5 | 5.0 | 5 | 5 | " | 3 | 5 | ⊚ |
| | 8 | PVA-1 | 65 | PEG-1 | 13 | PhOH-6 | 1.2 | 5 | 5 | " | 4 | 5 | ⊚ |
| | 9 | PVA-1 | 65 | PEG-1 | 13 | PhOH-7 | 1.2 | 5 | 4 | " | 4 | 5 | ⊚ |
| | 10 | PVA-1 | 55 | PEG-1 | 11 | PhOH-8 | 3.0 | 5 | 5 | " | 3 | 5 | ⊚ |
| | 11 | PVA-G | 55 | PEG-1 | 11 | PhOH-5 | 1.0 | 5 | 4 | " | 3 | 4 | ⊚ |
| | 12 | PVA-2 | 55 | PEG-2 | 11 | PhOH-5 | 1.0 | 5 | 4 | " | 3 | 4 | ⊚ |
| | 13 | PVA-2 | 55 | PEG-3 | 11 | PhOH-5 | 1.0 | 5 | 4 | " | 3 | 4 | ⊚ |
| | 14 | PVA-3 | 55 | PEG-1 | 11 | PhOH-2 | 1.0 | 5 | 2 | " | 2 | 4 | ○ |
| | 15 | PVA-3 | 55 | PEG-2 | 11 | PhOH-2 | 1.0 | 5 | 2 | " | 2 | 4 | ○ |
| | 16 | PVA-3 | 55 | PEG-3 | 11 | PhOH-2 | 1.0 | 5 | 2 | " | 2 | 4 | ○ |
| Comparative Example | 1 | PVA-1 | 55 | PEG-1 | 11 | - | | 2 | 1 | " | 1 | 4 | × |
| | 2 | PVA-1 | 55 | PEG-1 | 11 | PhOH-9 | 1.0 | 2 | 1 | " | 1 | 3 | × |
| | 3 | PVA-1 | 55 | PEG-1 | 11 | PhOH-10 | 3.0 | 2 | 1 | " | 1 | 3 | × |
| | 4 | PVA-1 | 55 | PEG-1 | 11 | PhOH-11 | 3.0 | 2 | 1 | " | 1 | 3 | × |
| | 5 | PVA-1 | 55 | PEG-1 | 11 | PhOH-12 | 0.1 | 2 | 2 | " | 1 | 3 | × |

## Claims

1. An organic hydrophilic coating composition, comprising:
a polyvinyl alcohol resin as a resin component, wherein the polyvinyl alcohol resin comprises a completely saponified polyvinyl alcohol having a degree of saponification of 97 mol% or more and 99.8 mol% or less;
as a resin component, a polyethylene glycol resin in addition to the polyvinyl alcohol resin; and
a phenol compound as an additional component, wherein the phenol compound, which is contained as the additional component, is selected from phenol antioxidants, has two or more hydroxyphenyl groups in its molecule, and each of the hydroxyphenyl groups has a bulky substituent that exhibits an effect of steric hindrance on a hydroxyl group.

2. An organic hydrophilic coating composition according to claim 1, wherein the bulky substituent in each of the hydroxyphenyl groups of the phenol compound comprises an alkyl group adjacent to a hydroxyl group.

3. An organic hydrophilic coating composition according to claim 2, wherein the bulky substituent in each of the hydroxyphenyl groups of the phenol compound comprises one kind or two or more kinds of alkyl groups selected from a methyl group, an ethyl group, an isopropyl group, and a tert-butyl group.

4. An organic hydrophilic coating composition according to any one of claims 1 to 3, wherein the organic hydrophilic coating composition comprises 40 g/L to 100 g/L of the polyvinyl alcohol resin as the resin component and 0.01 g/L to 12 g/L of the phenol compound as the additional component.

5. An organic hydrophilic coating composition according to claim 4, wherein the organic hydrophilic coating composition comprises 4 g/L to 15 g/L of the polyethylene glycol resin as the resin component.

6. A hydrophilic film, which is formed by applying and baking the organic hydrophilic coating composition of any one of claims 1 to 5, wherein the hydrophilic film is configured to cover a part or whole of a surface of an article.

7. An aluminum material for a heat exchanger, comprising a hydrophilic film formed by applying and baking the organic hydrophilic coating composition of any one of claims 1 to 5 on a part or whole of a surface of an aluminum material made of aluminum or an aluminum alloy.

8. An aluminum material for a heat exchanger according to claim 7, wherein the aluminum material for a heat exchanger comprises a precoated fin material.

9. An article comprising a hydrophilic film on a part or whole of a surface of the article, wherein the hydrophilic film comprises
a polyvinyl alcohol resin as a resin component, wherein the polyvinyl alcohol resin comprises a completely saponified polyvinyl alcohol having a degree of saponification of 97 mol% or more and 99.8 mol% or less;
as a resin component, a polyethylene glycol resin in addition to the polyvinyl alcohol resin; and
a phenol compound as an additional component, wherein the phenol compound, which is contained as the additional component, is selected from phenol antioxidants, has two or more hydroxyphenyl groups in its molecule, and each of the hydroxyphenyl groups has a bulky substituent that exhibits an effect of steric hindrance on a hydroxyl group.

10. An article according to claim 9, wherein the article is a heat exchanger or a part thereof and wherein the part or whole of the surface of the article on which the hydrophilic film is present is aluminum or an aluminum alloy.

11. An article according to claim 10, wherein the article is a precoated fin material of the heat exchanger.

## Patentansprüche

1. Eine organische hydrophile Beschichtungszusammensetzung, umfassend:
ein Polyvinylalkoholharz als eine Harzkomponente, wobei das Polyvinylalkoholharz einen vollständig verseiften Polyvinylalkohol mit einem Verseifungsgrad von 97 Mol-% oder mehr und 99,8 Mol-% oder weniger umfasst;
als eine Harzkomponente, ein Polyethylenglycolharz zusätzlich zu dem Polyvinylalkoholharz; und
eine Phenolverbindung als eine zusätzliche Komponente, wobei die Phenolverbindung, die als die zusätzliche Komponente enthalten ist, ausgewählt ist aus Phenolantioxidationsmitteln, zwei oder mehr Hydroxyphenylgruppen in ihrem Molekül aufweist, und jede der Hydroxyphenylgruppen einen sperrigen Substituenten aufweist, der eine Wirkung einer sterischen Hinderung auf eine Hydroxylgruppe ausübt.

2. Eine organische hydrophile Beschichtungszusammensetzung nach Anspruch 1, wobei der sperrige Substituent in jeder der Hydroxyphenylgruppen der Phenylverbindung eine zu einer Hydroxylgruppe benachbarte Alkylgruppe umfasst.

3. Eine organische hydrophile Beschichtungszusammensetzung nach Anspruch 2, wobei der sperrige Substituent in jeder der Hydroxyphenylgruppen der Phenolverbindung eine Art oder zwei oder mehrere Arten von Alkylgruppen umfasst, ausgewählt aus einer Methylgruppe, einer Ethylgruppe, einer Isopropylgruppe und einer Tertbutylgruppe .

4. Eine organische hydrophile Beschichtungszusammensetzung nach einem der Ansprüche 1 bis 3, wobei die organische hydrophile Beschichtungszusammensetzung 40 g/l bis 100 g/l des Polyvinylalkoholharzes als die Harzkomponente und 0,01 g/l bis 12 g/l der Phenolverbindung als die zusätzliche Komponente umfasst.

5. Eine organische hydrophile Beschichtungszusammensetzung nach Anspruch 4, wobei die organische hydrophile Beschichtungszusammensetzung 4 g/l bis 15 g/l des Polyethylenglycolharzes als die Harzkomponente umfasst.

6. Ein hydrophiler Film, der durch Aufbringen und Erwärmen der organischen hydrophilen Beschichtungszusammensetzung nach einem der Ansprüche 1 bis 5 gebildet wird, wobei der hydrophile Film so konfiguriert ist, dass er einen Teil oder die gesamte Oberfläche eines Gegenstands bedeckt.

7. Ein Aluminiummaterial für einen Wärmetauscher, umfassend einen hydrophilen Film, der gebildet wird durch Aufbringen und Erwärmen der organischen hydrophilen Beschichtungszusammensetzung nach einem der Ansprüche 1 bis 5 auf einen Teil oder die gesamte Oberfläche eines Aluminiummaterials, hergestellt aus Aluminium oder einer Aluminiumlegierung.

8. Ein Aluminiummaterial für einen Wärmetauscher nach Anspruch 7, wobei das Aluminiummaterial für einen Wärmetauscher ein vorbeschichtetes Rippenmaterial umfasst.

9. Ein Gegenstand umfassend einen hydrophilen Film auf einem Teil oder einer Gesamtoberfläche des Gegenstands, wobei der hydrophile Film umfasst:
ein Polyvinylalkoholharz als eine Harzkomponente, wobei das Polyvinylalkoholharz einen vollständig verseiften Polyvinylalkohol mit einem Verseifungsgrad von 97 Mol-% oder mehr und 99,8 Mol-% oder weniger umfasst;
als eine Harzkomponente, ein Polyethylenglycolharz zusätzlich zu dem Polyvinylalkoholharz; und
eine Phenolverbindung als eine zusätzliche Komponente, wobei die Phenolverbindung, die als die zusätzliche Komponente enthalten ist, ausgewählt ist aus Phenolantioxidationsmitteln, zwei oder mehr Hydroxyphenylgruppen in ihrem Molekül aufweist, und jede der Hydroxyphenylgruppen einen sperrigen Substituenten aufweist, der eine Wirkung einer sterischen Hinderung auf eine Hydroxylgruppe ausübt.

10. Ein Gegenstand nach Anspruch 9, wobei der Gegenstand ein Wärmetauscher oder ein Teil davon ist und wobei der Teil oder die gesamte Oberfläche des Gegenstands, auf der der hydrophile Film vorhanden ist, Aluminium oder eine Aluminiumlegierung ist.

11. Ein Gegenstand nach Anspruch 10, wobei der Gegenstand ein vorbeschichtetes Rippenmaterial des Wärmetauschers ist.

## Revendications

1. Composition de revêtement hydrophile organique comprenant :
une résine de poly(alcool vinylique) en tant que composant résine, laquelle résine de poly(alcool vinylique) comprend un poly(alcool vinylique) complètement saponifié ayant un degré de saponification de 97 % en moles ou plus et de 99,8 % en moles ou moins ;
en tant que composant résine, une résine de polyéthylèneglycol en plus de la résine de poly(alcool vinylique) ; et
un composé phénol en tant que composant additionnel, lequel composé phénol, qui est contenu en tant que composant additionnel, est choisi parmi les antioxydants phénoliques, a deux ou plus de deux groupes hydroxyphényle dans sa molécule, et dont chacun des groupes hydroxyphényle a un substituant encombrant qui présente un effet d'entrave stérique sur un groupe hydroxyle.

2. Composition de revêtement hydrophile organique selon la revendication 1, dans laquelle le substituant encombrant dans chacun des groupes hydroxyphényle du composé phénol comprend un groupe alkyle adjacent à un groupe hydroxyle.

3. Composition de revêtement hydrophile organique selon la revendication 2, dans laquelle le substituant encombrant dans chacun des groupes hydroxyphényle du composé phénol comprend un type ou deux ou plus de deux types de groupes alkyle choisis parmi un groupe méthyle, un groupe éthyle, un groupe isopropyle, et un groupe tert-butyle.

4. Composition de revêtement hydrophile organique selon l'une quelconque des revendications 1 à 3, laquelle composition de revêtement hydrophile organique comprend 40 g/l à 100 g/l de la résine de poly(alcool vinylique) en tant que composant résine et 0,01 g/l à 12 g/l du composé phénol en tant que composant additionnel.

5. Composition de revêtement hydrophile organique selon la revendication 4, laquelle composition de revêtement hydrophile organique comprend 4 g/l à 15 g/l de la résine de polyéthylèneglycol en tant que composant résine.

6. Film hydrophile qui est formé par application et cuisson de la composition de revêtement hydrophile organique de l'une quelconque des revendications 1 à 5, lequel film hydrophile est configuré pour couvrir une partie ou la totalité d'une surface d'un article.

7. Matériau en aluminium pour un échangeur de chaleur, comprenant un film hydrophile formé par application et cuisson de la composition de revêtement hydrophile organique de l'une quelconque des revendications 1 à 5 sur une partie ou la totalité d'une surface d'un matériau en aluminium fait d'aluminium ou d'un alliage d'aluminium.

8. Matériau en aluminium pour un échangeur de chaleur selon la revendication 7, lequel matériau en aluminium pour un échangeur de chaleur comprend un matériau d'ailette prérevêtu.

9. Article comprenant un film hydrophile sur une partie ou la totalité d'une surface de l'article, dans lequel le film hydrophile comprend
une résine de poly(alcool vinylique) en tant que composant résine, laquelle résine de poly(alcool vinylique) comprend un poly(alcool vinylique) complètement saponifié ayant un degré de saponification de 97 % en moles ou plus et de 99,8 % en moles ou moins ;
en tant que composant résine, une résine de polyéthylèneglycol en plus de la résine de poly(alcool vinylique) ; et
un composé phénol en tant que composant additionnel, lequel composé phénol, qui est contenu en tant que composant additionnel, est choisi parmi les antioxydants phénoliques, a deux ou plus de deux groupes hydroxyphényle dans sa molécule, et dont chacun des groupes hydroxyphényle a un substituant encombrant qui présente un effet d'entrave stérique sur un groupe hydroxyle.

10. Article selon la revendication 9, lequel article est un échangeur de chaleur ou une partie de celui-ci, et dans lequel la partie ou la totalité de la surface de l'article sur lequel le film hydrophile est présent est en aluminium ou en un alliage d'aluminium.

11. Article selon la revendication 10, lequel article est un matériau d'ailette prérevêtu de l'échangeur de chaleur.
